# EUROPÄISCHE PATENTSCHRIFT

(11) **EP 0 774 635 B1**
(45) Veröffentlichungstag und Bekanntmachung des Hinweises auf die Patenterteilung: **26.05.1999**
(21) Anmeldenummer: 96115275.8
(22) Anmeldetag: 24.09.1996
(51) Int. Cl.: F27B 1/02, C04B 2/12

(54) **Ringschachtofen**
Ringshaft furnace
Four à cuve annulaire

(30) Priorität: 07.10.1995 DE 19537435
(43) Veröffentlichungstag der Anmeldung: 21.05.1997
(73) Patentinhaber: Beckenbach Wärmestelle GmbH, 40477 Düsseldorf (DE)
(72) Erfinder: Beckenbach, Ulrich, 40477 Düsseldorf (DE)
(74) Vertreter: Cohausz & Florack

(56) Entgegenhaltungen:
- EP-A- 0 139 025
- DE-A- 2 710 205
- DE-C- 3 915 986
- FR-A- 2 514 341
- US-A- 4 626 200
- US-A- 4 668 184

## Beschreibung

Die Erfindung betrifft einen Ringschachtofen zur Behandlung von stückigem Gut, insbesondere zur thermischen Behandlung von Kalk- und Dolomitgestein zur Umwandlung in Kalk, mit den Merkmalen im Oberbegriff des Anspruchs 1, wie sie aus der DE 3 915 986 C1 bekannt sind. Ein solcher Ringschachtofen besteht aus einem zylindrischen Außenmantel mit im wesentlichen senkrecht stehender Achse, in welchem auf einem Teil seiner Länge ein oder mehrere Innenzylinder unter Bildung eines Ringraums konzentrisch angeordnet sind. Am oberen Ende des Ofens ist eine Schleuse mit Aufgabetrichter zur Beschickung mit stückigem Gut vorgesehen. Die Schleuse soll verhindern, daß bei der diskontinuierlichen Beschickung des Ofens mit stückigem Gut unkontrolliert Gase eintreten bzw. entweichen können. Am unteren Ende des Ringschachtofens ist eine Austragvorrichtung, die das durch Brennen umgewandelte Gut austrägt. Bei jedem Austragvorgang rutscht das im Ringraum des Schachtofens befindliche stückige Gut nach unten und gelangt so nach und nach vom oberen Beschickungsende des Ofens zu seinem unteren Austragende. Auf diesem Weg durch den Ofen erfolgt die chemische Umwandlung mit Hilfe von Heißgasen, die in den Ofen eintreten und den Ofen von unten nach oben durch das stückige Gut hindurch durchströmen. Zur Einleitung dieser Heißgase befinden sich auf mindestens drei voneinander beabstandeten Querschnittsebenen Stutzen am Außenmantel des Ringschachtofens. In jeder Ebene sind die Stutzen auf den Umfang des Ofens zu mehreren verteilt angeordnet. Bei drei Stutzen zum Beispiel stehen die Stutzen unter einem Winkel von 120° zueinander, bei vier Stutzen sind es 90°. In aufeinanderfolgenden Querschnittsebenen stehen die Stutzen so versetzt zueinander, daß mitten zwischen zwei Stutzen der oberen Ebene ein Stutzen der darunter befindlichen Ebene angeordnet ist. Auf diese Weise wird die gleichmäßige Einleitung der Brennergase in die ringförmige Gutsäule sichergestellt. Am oberen Ende des Ringschachtofens bis zur obersten Querschnittsebene, in der Heißgas-Zuführstutzen angeordnet sind, befinden sich, von oben nach unten gesehen, die Vorwärmzone und die erste Brennzone. Zwischen der obersten und der nächstfolgenden unteren Zuführstutzen-Ebene befindet sich die mittlere Brennzone, und zwischen der mittleren bis zur unteren Ebene der Zuführstutzen ist die untere Brennzone gebildet. Von der untersten Ebene der Zuführstutzen bis zum unteren Ende des Schachtofens befindet sich die Kühlzone. Die Heißgase von z.B. mit fossilen gasförmigen oder flüssigen Brennstoffen betriebenen Brennern, ggf. vermischt mit Umwälzgasen, werden durch die einzelnen Stutzen in regelbaren Mengen und je nach Bedarf mit Luft gemischt in einen von stückigem Gut nicht belegten Hohlraum jeweils unter einer Brücke im Ringraum in den Ofen eingeführt und durchströmen das darin befindliche stückige Gut. Um die Zwangsführung der Heißgase von unten nach oben im Ofen zu bewirken und zu fördern, werden die Gase im oberen Teil des Ofens mittels eines Sauggebläses aus dem Ofen abgesaugt oder/und mittels eines Druckgebläses durch den Ofen gedrückt. Bei Anordnung eines Sauggebläses entsteht im Ofen ein Unterdruck gegenüber der umgebenden Atmosphäre. Dies hat den Vorteil, daß man beim Öffnen des Ofens an irgendeiner Stelle nicht mit dem Austritt von unter Druck stehenden Gasen aus dem Ofen rechnen muß. So können erforderlichenfalls Wartungsarbeiten während des Betriebs des Ofens durchgeführt werden.

Durch die Austrageöffnungen im unteren Teil des Ringschachtofens kann Kühlluft in die Kühlzone eintreten. Durch eine mittige Absaugung dieser Kühlluft aus der Kühlzone läßt sich die Kühlwirkung durch die Außenluft regulieren.

Der Ofen kann noch mit verschiedenen Hilfseinrichtungen, wie Wärmetauschern, Umwälzeinrichtungen und dergleichen ausgestattet sein, die aber hier im Zusammenhang mit der Erfindung nicht weiter interessieren.

Der vorstehend geschilderte bekannte Ringschachtofen ist dazu bestimmt und geeignet, stückiges Gut in verschiedenen Härtestufen zu brennen. So kann insbesondere mehr oder weniger hartgebrannter Kalk aus Kalk- bzw. Dolomitstein durch den abgestuften und geregelten Brennvorgang erzeugt werden.

Der Erfindung liegt nun die Aufgabe zugrunde, einen Ringschachtofen zu schaffen, der sowohl zum Brennen von stückigem Gut in verschiedenen Härtegraden, aber auch zur Erzeugung von weichgebranntem hochreaktivem Gut geeignet ist. Bisher ist ein solcher Ringschachtofen weder in der Konzeption angedacht, noch in der Praxis ausgeführt worden.

Zur Lösung dieser Aufgabe ist erfindungsgemäß ein Ringschachtofen mit den Merkmalen des Anspruch 1 vorgesehen. Die erfindungsgemäße Lösung besteht gegenüber dem Stand der Technik darin, daß der Ringschachtofen in mindestens drei beabstandeten Querschnittszonen in seinem mittleren Teil Heißgas-Zuführstutzen und eine Gasabsaugung durch den Innenzylinder aufweist, wobei die Öffnungen für das Absaugen aus dem Ringraum etwa in Höhe der untersten Heißgas-Zuführstutzenebene gelegen sind. Diese Öffnungen für die Heißgasabsaugungen sind, bevorzugt in einer Querschnittsebene, am Umfang des Innenzylinders verteilt angeordnet, um die Heißgase gleichmäßig aus dem Ringraum abzusaugen. Um das Absaugen zu bewirken, ist an dem Innenzylinder eine Absaugleitung angeschlossen, die zu einem Unterdruck erzeugenden Aggregat, z. B. einem saugenden Ventilator außerhalb des Ofens führen kann. Alternativ kann in dem Innenzylinder auch ein Unterdruck erzeugendes Aggregat, z. B. ein Absaugventilator, angeordnet sein. Im letzteren Fall ist natürlich die Zugänglichkeit zu dem Ventilator, z.B. wenn eine Reparatur nötig ist, erschwert.

Die durch den Innenzylinder abgesaugten Heißgase können entweder einem Wärmetauscher zugeführt werden, oder/und sie werden den mittleren Heißgas-Zuführstutzen zugeführt, so daß sie im Kreislauf umgewälzt werden und damit keine Umweltprobleme verursachen und eine größtmögliche Wärmeausnutzung garantieren.

In der Zeichnung ist ein Ausführungsbeispiel eines erfindungsgemäßen Ringschachtofens dargestellt, anhand dessen die Erfindung näher erläutert werden soll.
- Fig. 1: ist ein Längsschnitt und
- Fig. 2: ein Querschnitt längs der Linie A - B aus Fig. 1.
- Fig. 3: zeigt in vergrößertem Maßstab im Schnitt C-D aus Fig. 2 eine Brücke zwischen Mantel und Innenzylinder.

Der Ringschachtofen besitzt einen zylindrischen Mantel 1, der mit etwa vertikaler Achse auf dem Boden 2 abgestützt ist. Konzentrisch in ihm ist der Innenzylinder 3 angeordnet und mit dem Mantel 1 über Brücken 4 verbunden. In dem Ringraum 5 zwischen Mantel 1 und Innenzylinder 3 befindet sich das stückige Gut 6. Dieses wird am oberen Ende des Ofens aufgegeben und an seinem unteren Ende nach dem Durchlaufen des Ofens ausgetragen.

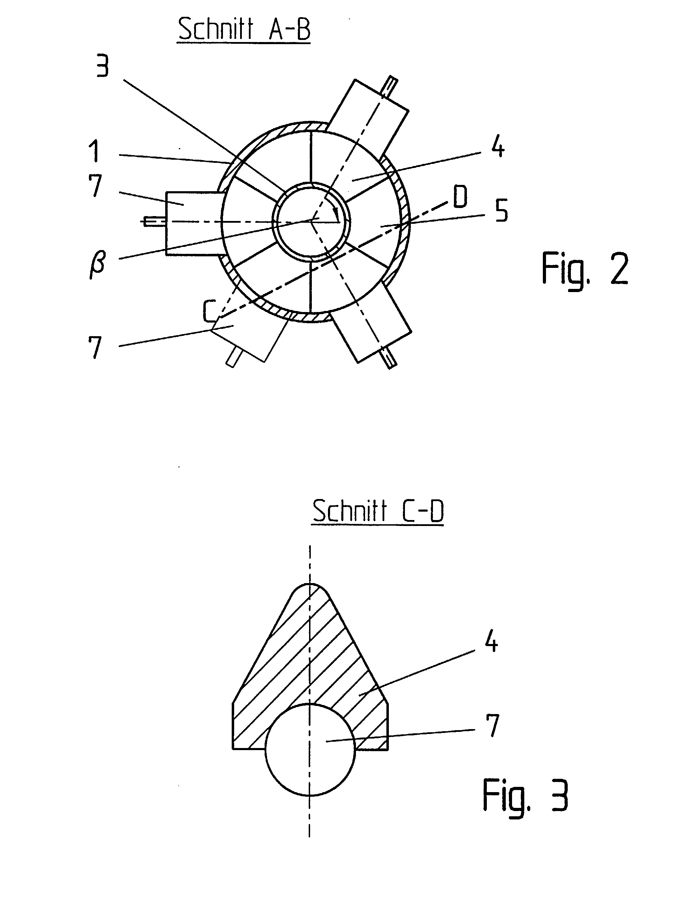

Auf mindestens drei beabstandeten Querschnittsebenen sind jeweils drei oder mehrere auf dem Ofenumfang gleichmäßig verteilte Stutzen 7 für die Zufuhr von Heißgasen angeordnet. Die Heißgase können von Brennern erzeugt oder aus anderen Quellen geliefert werden. Die Stutzen 7 münden in jeder Ebene unter jeweils einer Brücke 4, wo sich ein mit stückigem Gut 6 nicht besetzter Hohlraum 8 bildet, aus dem heraus sich die Gase in den Ringraum 5 verteilen und in Pfeilrichtung nach oben strömen. In einer Querschnittsebene sind beispielsweise gemäß Fig. 2 drei Stutzen 7 vorgesehen, deren Achsen jeweils einen Winkel von 120° einschließen. Die Stutzen 7 sind auf den aufeinander folgenden Querschnittsebenen derart in Umfangsrichtung versetzt zueinander angeordnet, daß die Stutzen 7 der folgenden Ebene auf Lücke zur vorhergehenden stehen. Bevorzugt liegen sie etwa in der Mitte zwischen zwei Stutzen der vorhergehenden Ebene. In Fig. 2 ist als Beispiel ein Stutzen 7 aus der unter der dargestellten Querschnittsebene liegenden Zuführstutzenebene strichpunktiert angedeutet.

In dem Ofen bilden sich folgende Zonen aus:
V - Vorwärmzone
B1 - obere Brennzone
B2 - mittlere Brennzone
B3 - untere Brennzone
K - Kühlzone

Durch Öffnungen 9 kann durch das unten offene Austragende des Ofens in die Kühlzone K eintretende Kühlluft in den geschlossenen unteren Abschnitt 10 des Innenzylinders 3 einströmen, kann von dort nach außen abgeleitet und dem Ringschachtofen wieder zugeführt werden.

In dem Innenzylinder 3 sind im unteren Teil ferner etwa in Höhe der untersten Zuführstutzen 7 Öffnungen 11 zum Ringraum 5 vorgesehen. Im oberen Bereich des Innenzylinders 3 ist eine Leitung 12 für eine Absaugung der durch die Öffnungen 11 in den Innenzylinder 3 eintretenden Heißgase angeschlossen. An die Leitung 12 kann ein Sauggebläse angeschlossen sein. Dieses kann weiter über eine strichpunktiert angedeutete Leitung 13 mit den Zuführstutzen 7 der mittleren Ebene verbunden sein.

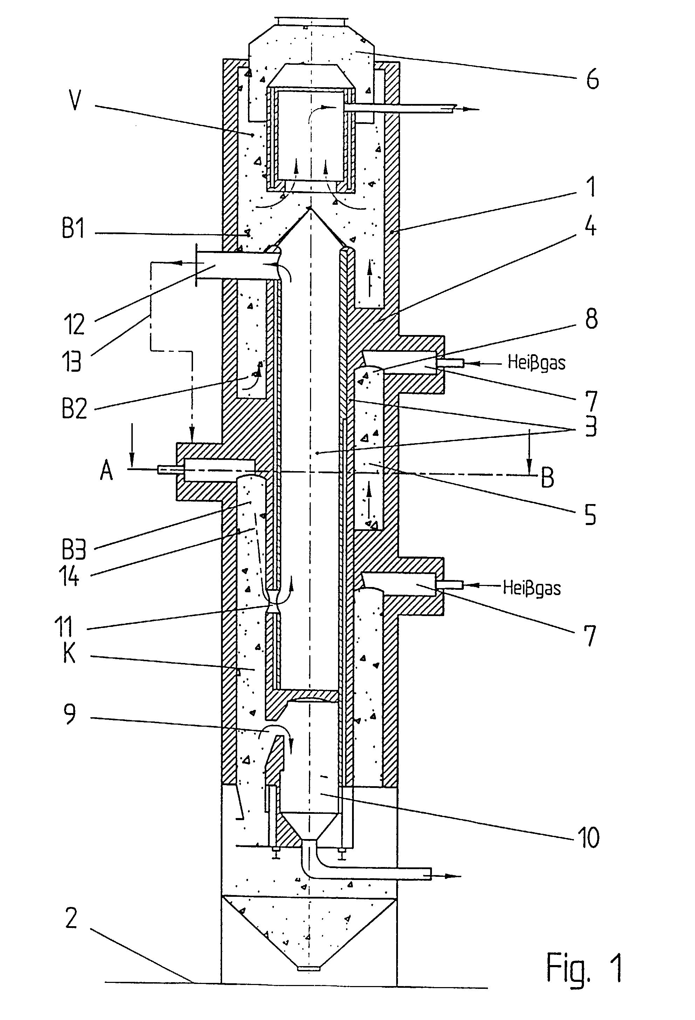

Die Betriebsweise des Ofens gemäß der Erfindung ist nun wie folgt:
a) Erzeugung von hartgebranntem stückigem Gut
   Durch die Zuführstutzen 7 in allen drei Querschnittsebenen wird Heißgas in den Ringraum 5 und das darin befindliche stückige Gut 6 geleitet. Die Leitung 12 ist abgesperrt bzw. das daran angeschlossene nicht dargestellte Unterdruck erzeugende Aggregat ist außer Betrieb.
   Durch Variation der eingeblasenen Heißgasmengen und/oder Veränderung der Temperatur der Heißgase kann der gewünschte Härtegrad beim Brennen des stückigen Guts gezielt erreicht werden. Die Temperatur der Heißgase läßt sich z.B. durch Zumischen von Luft oder Umwälzgasen entsprechend variieren.
b) Erzeugung von weichgebranntem hochreaktivem Gut
   Die Zuführstutzen 7 in der untersten Querschnittsebene fördern nun kein Heißgas. Dieses wird allein durch die Zuführstutzen 7 in den beiden darüber befindlichen Ebenen in das stückige Gut 6 eingeleitet. Die Leitung 12 zum Unterdruck erzeugenden Aggregat wird geöffnet und dieses wird zur Erzeugung eines Unterdrucks in den Innenzylinder 3 in Betrieb gesetzt. Dadurch bedingt, werden nun durch die Öffnungen 11 im unteren Abschnitt des Innenzylinders 3 aus dem Ringraum 5 des Ofens Heißgase in dem Innenzylinder 3 gesaugt. Es entsteht so in dem Ringraum 5 eine Gleichstromzone innerhalb der unteren Brennzone B3, in der von der mittleren Ebene der Zuführstutzen 7 zugeführte Heißgase in Förderrichtung des Gutes, also im "Gleichstrom" mit diesem, von der mittleren Ebene der Zuführstutzen 7 bis zu den Öffnungen 11 strömen, wie in Fig. 1 mit der strichpunktierten Linie 14 angedeutet. Mit dieser Gleichstromzone wird die Voraussetzung für das Erbrennen von hochreaktivem Gut geschaffen.
   Der erfindungsgemäße Ofen ermöglicht so die beiden vorgenannten Fahrweisen, um sowohl hartgebranntes als auch weichgebranntes Material zu erzeugen.

## Patentansprüche

1. Ringschachtofen zur Behandlung von stückigem Gut, insbesondere zur thermischen Behandlung von Kalk- und Dolomitgestein, zur Umwandlung in Kalk, mit im wesentlichen senkrechter Achse, in dem durch einen Innenzylinder (3) ein von Gut belegter Ringraum (5) gebildet ist, der am oberen Ende mit einer Beschickungsvorrichtung für Gut und einer Heißgasabsaugung versehen ist, der ferner in mindestens drei beabstandeten Querschnittsebenen Stutzen (7) für die Zufuhr von Heißgasen aufweist, die den Ofen in eine Vorwärmzone (V), in obere, mittlere und untere Brennzonen (B1, B2, B3) und eine Kühlzone (K) unterteilen und die jeweils zu dritt oder zu mehreren über den Ofenumfang gleichmäßig verteilt sind und von einer Ebene zur anderen in Umfangsrichtung etwa um einen halben Teilungswinkel gegeneinander versetzt sind und die jeweils unter einer Brücke (4) zwischen dem Außenmantel (1) des Ofens und dem Innenzylinder (3) in einem nicht von Gut belegten Hohlraum (8) münden, und der am unteren Gutaustragende für den Eintritt von Kühlluft vorgesehen ist,
**dadurch gekennzeichnet**, daß etwa in Höhe der unteren Heißgas-Zuführstutzen (7) im Innenzylinder (3) auf seinem Umfang verteilte seitliche Öffnungen (11) zum Ringraum (5) hin angeordnet sind und am oder im Innenzylinder (3) eine absperrbare Gasabsaugung (12) vorgesehen ist.

2. Ringschachtofen nach Anspruch 1,
**dadurch gekennzeichnet**, daß die Gasabsaugung (12) zu den mittleren Zuführstutzen (7) führt.

## Claims

1. An annular shaft oven for treating lump material, in particular for thermal treatment of limestone and dolomite rock for conversion to lime, with an essentially vertical axis, where an annular space (5) filled with material is formed by an inside cylinder (3) and is provided at the upper end with a feed device for material and with a hot gas exhaust, also having connections (7) for a supply of hot gases in at least three cross-sectional levels spaced a distance apart, subdividing the oven into a preheating zone (V), an upper, middle and lower combustion zone (B1, B2, B3) and a cooling zone (K), said connections being distributed uniformly in thirds or more over the circumference of the oven, being offset approximately by half an angular pitch with respect to one another from one level to the next in the peripheral direction, and each opening into a cavity (8) below a bridge (4) between the outside jacket (1) of the oven and the inside cylinder (3) which is free of material and is provided for the admission of cool air at the lower material discharge end, characterized in that lateral openings (11) facing toward the annular space (5) are arranged around the circumference of the inside cylinder (3), approximately at the level of the lower hot gas feed connections (7), and a gas exhaust (12) that can be cut off is provided in or on the inside cylinder (3).

2. Annular shaft oven according to claim 1,
characterized in that the gas exhaust (12) leads to the middle feed connection (7).

## Revendications

1. Four vertical annulaire pour le traitement de matières en morceaux, en particulier pour le traitement thermique de roche calcaire ou dolomitique, en vue de sa transformation en chaux, à axe sensiblement vertical, dans lequel un espace annulaire (5) qui est occupé par des matières est formé par un cylindre interne (3) et est pourvu, à son extrémité supérieure, d'un dispositif pour l'enfournement des matières et d'un dispositif d'aspiration des gaz chauds, et présente en outre, dans au moins trois plans de la section transversale espacés, des tubulures (7) servant à l'apport de gaz chauds et qui compartimentent le four en une zone de préchauffage (V), en zones de cuisson supérieure, médiane et inférieure (B1, B2, B3), et en une zone de refroidissement (K), lesquelles sont régulièrement distribuées respectivement à trois ou à plusieurs sur la circonférence du four, et qui sont décalées entre elles dans le sens de la circonférence, d'un plan à l'autre, d'environ un demi pas angulaire, et qui débouchent respectivement sous un pont (4) entre l'enveloppe externe (1) du four et le cylindre interne (3), dans un espace creux (8) non occupé par des matières, et qui est prévu à l'extrémité inférieure de sortie des matières, en vue de l'admission d'air de refroidissement, caractérisé en ce qu'à hauteur des tubulures d'apport de gaz chaud inférieures (7) dans le cylindre interne (3) environ, des ouvertures latérales (11) dirigées vers l'espace annulaire (5) sont ménagées sur son pourtour, et en ce qu'un dispositif d'aspiration de gaz (12) obturable est prévu sur ou dans le cylindre interne (3).

2. Four vertical annulaire selon la revendication 1, caractérisé en ce que le dispositif d'aspiration de gaz (12) conduit aux tubulures d'apport médianes (7).
